Europäisches Patentamt

European Patent Office

Office européen des brevets

(11) Veröffentlichungsnummer: **0 341 579**
**A2**

## EUROPÄISCHE PATENTANMELDUNG

(21) Anmeldenummer: 89108083.0

(22) Anmeldetag: 05.05.89

(51) Int. Cl.4: **B64F 5/00**

(30) Priorität: 13.05.88 DE 3816381

(43) Veröffentlichungstag der Anmeldung:
15.11.89 Patentblatt 89/46

(84) Benannte Vertragsstaaten:
AT CH DE ES FR GB IT LI

(71) Anmelder: Hydro-Gerätebau GmbH & Co. KG
Hebezeuge
Industriegebiet
D-7616 Biberach/Baden(DE)

(72) Erfinder: Scharsig, Hans-Hermann
Drehersacker 11
7600 Offenburg(DE)

(74) Vertreter: Schmitt, Hans, Dipl.-Ing. et al
Patentanwälte Dipl.-Ing H. Schmitt Dipl.-Ing.
W. Maucher Dreikönigstrasse 13
D-7800 Freiburg(DE)

(54) Heber, insbesondere Dreibockheber für Flugzeuge.

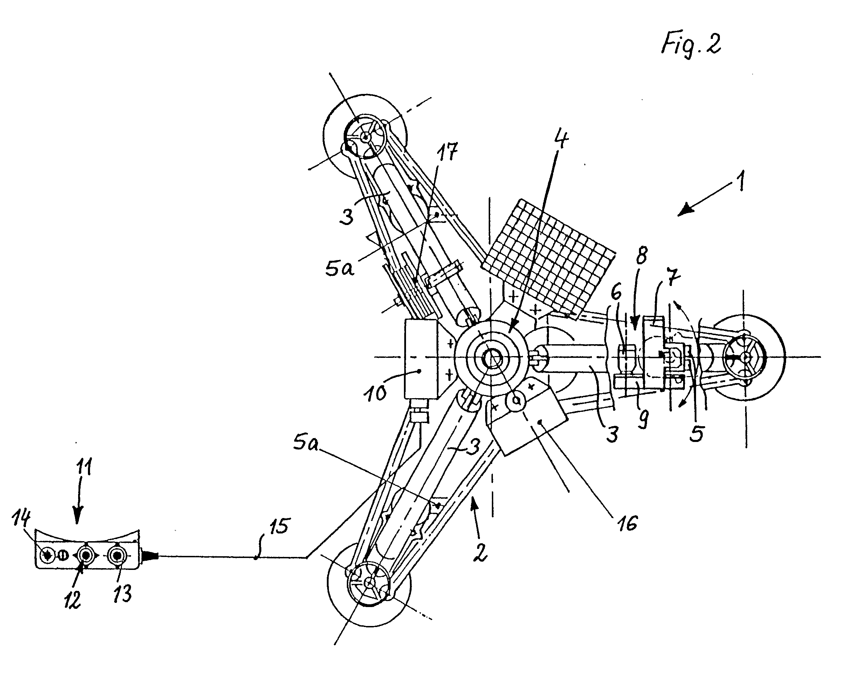

(57) Ein Dreibockheber (1) (Fig. 2) dient zum Anheben von Flugzeugen. Er weist dazu einen in einem Trägergestell (2) angeordneten Zylinder (4) auf. Der Heber hat Räder zum Verfahren. Erfindungsgemäß ist nun eines der üblicherweise drei Räder (5) mit einem Fahrantrieb (6) und einem Lenkantrieb (7) verbunden. Diese können mit Hilfe einer Steuereinrichtung (10) sowie einer Fernbedieneinrichtung (11) betätigt werden. Der Fahrantrieb und der Lenkantrieb sind vorzugsweise in einer kompakten Antriebs-und Lenkeinheit (8) zusammengefaßt und oberhalb des Lenk-bzw. Antriebsrades angeordnet. Die übrigen Räder lassen sich in einer Parallellage festlegen. Der so gebildete Selbstfahrheber läßt sich von einer einzigen Bedienperson in seine Arbeitsstellung unter dem jeweiligen Aufnahmepunkt am Luftfahrzeug positionieren. Bedarfsweise kann der Fahrantrieb (6) auch zum Verfahren des Dreibockhebers zu einem Abstellplatz verwendet werden.

Fig 2

EP 0 341 579 A2

## Heber, insbesondere Dreibockheber für Flugzeuge

Die Erfindung betrifft einen Heber, insbesondere einen Dreibockheber für Flugzeuge mit einem in einem Gestell angeordneten Hubzylinder sowie mit Rädern zum Verfahren des Dreibockhebers.

Solche bekannten Dreibockheber werden üblicherweise von Abstell- oder Parkplätzen mit Hilfe eines Schleppgerätes in den Aufbockbereich unterhalb eines Flugzeuges gebracht und dort nach dem Abkuppeln des Schleppgerätes von mehreren Leuten positioniert, bis eine fluchtende Lage des Hubzylinders und des am Flugzeug befindlichen Hebepunktes vorhanden ist. Dabei muß sehr genau positioniert werden, um Beschädigungen am Flugzeug zu vermeiden. Wegen der Größe und des Gewichtes solcher Dreibockheber, die beim Positionieren insgesamt bewegt werden müssen, erfordert dieser Vorgang einerseits einen hohen Kraftaufwand und deshalb in der Regel auch mehrere Personen, andererseits ist aber ein sehr genaues, feinfühliges Positionieren nötig. Diese beiden praktisch gegensätzlichen Anforderungen machen die Handhabung schwierig.

Aufgabe der vorliegenden Erfindung ist es, einen Heber, insbesondere einen Dreibockheber der eingangs erwähnten Art zu schaffen, dessen Handhabung wesentlich vereinfacht ist, so daß problemlos auch eine Bedienung durch eine einzige Person möglich ist. Gegebenenfalls soll auch der Einsatz eines Schleppgerätes entbehrlich sein.

Zur Lösung dieser Aufgabe wird erfindungsgemäß insbesondere vorgeschlagen, daß der Heber als Selbstfahrheber mit einem Fahrantrieb und wenigstens einem lenkbaren Rad ausgebildet ist.

Ein solcher Selbstfahrheber kann problemlos von einer Bedienperson gesteuert werden, wobei auch sehr feinfühlig ein Positionieren des Hebers möglich ist. Gleichzeitig besteht auch die Möglichkeit, daß der Heber ohne Verwendung eines Schleppgerätes von einer Ausgangsposition bei einem Abstellplatz, zum Flugzeug fahren kann.

Zweckmäßigerweise weist der Heber zwei parallel angeordnete Räder sowie ein mit einem Lenkantrieb verbundenes drittes Rad auf. Dadurch ist einerseits ein guter Geradeauslauf, andererseits aber auch ein gutes Positionieren möglich.

Eine Ausführungsform sieht vor, daß der Fahrantrieb und der Lenkantrieb eine Antriebs- und Lenkeinheit bilden, die insbesondere oberhalb des Lenk- und Antriebsrades angeordnet ist. Eine solche Antriebs- und Lenkeinheit läßt sich kompakt aufbauen und nimmt dementsprechend wenig Platz weg. Sie ist daher gut auch bei beengten Platzverhältnissen, wie sie bei Dreibockhebern bestehen, noch gut unterbringbar.

Vorzugsweise ist eine hydraulische, insbesondere hydrostatische Antriebs- und Lenkeinheit mit einem Hydraulikantriebsmotor und einem Hydrauliksteuermotor vorgesehen, die mit einem Hydraulikaggregat verbunden sind. Da für den Betrieb des Hubzylinders des Hebers bereits ein Hydraulikaggregat vorhanden ist, könnten die Hydraulikmotoren der Antriebs- und Lenkeinheit von diesem Hydraulikaggregat mitversorgt werden.

Nach einer Ausgestaltung der Erfindung ist vorgesehen, daß der Heber eine in Schleppstellung und Ruhestellung umklappbare und in Schleppstellung mit dem Lenkrad verbundene Schlepp-Deichsel hat, die mit einer Umschaltvorrichtung zum Trennen der Antriebs- und Lenkeinheit von dem zugehörigen Rad in Schleppstellung der Deichsel verbunden ist.

Dadurch besteht die Möglichkeit, den Heber entweder als Selbstfahrheber oder aber in Verbindung mit einem Schleppgerät wie bisher zu betreiben, wobei die Verwendung des Schleppgerätes insbesondere dann vorgesehen ist, wenn der Heber von einem weiter entfernten Parkplatz zu dem Einsatzort gebracht werden soll, während anschließend beim Positionieren unterhalb des Flugzeuges der eigene Fahrantrieb und die Lenkung eingeschaltet werden können. Die Umschaltung erfolgt dabei automatisch durch Hochklappen der Schlepp-Deichsel.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:

Fig. 1 eine Seitenansicht eines Dreibockhebers,

Fig. 2 eine Aufsicht eines Dreibockhebers und

Fig. 3 eine Detail-Aufsicht der Antriebs- und Lenkeinheit des in Fig. 1 und 2 gezeigten Dreibockhebers.

Ein Dreibockheber 1 weist ein Trägergestell 2 mit drei Stützarmen 3 sowie einem zentral angeordneten Hubzylinder 4 auf. Bei den unteren Enden der Stützarme 3 sind Boden-Stützteller angeordnet. Zum Verfahren des Dreibockhebers 1 sind Räder vorgesehen, die insbesondere als Pendel-Nachlaufräder ausgebildet sind. Erfindungsgemäß ist nun vorgesehen, daß eines dieser Räder 5 mit einem Fahrantrieb 6 verbunden und außerdem auch lenkbar ist.

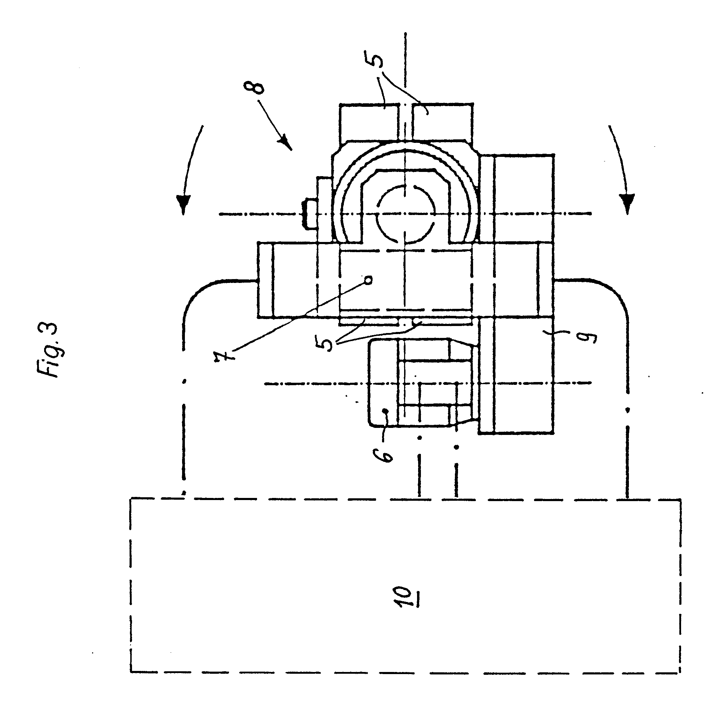

Obwohl auch eine manuelle Lenkung denkbar ist, weist der erfindungsgemäße Dreibockheber 1 sowohl für den Fahrantrieb 6 als auch für den Lenkantrieb 7 Antriebsmotoren auf, die im vorliegenden Ausführungsbeispiel zu einer Antriebs- und Lenkeinheit 8 zusammengefaßt sind (vgl. insbesondere Fig. 3).

Die beiden anderen Räder 5a sind als freischwenkbare Nachlaufräder ausgebildet, die für den angetriebenen Fahrbetrieb in Parallellage festlegbar sind. In dieser Parallellage befinden sie sich auch in Parallellage zu dem in Geradeausstellung befindlichen, lenkbaren Rad 5. Durch das Festlegen der Räder 5a wird ein kontrollierter Geradeauslauf erreicht.

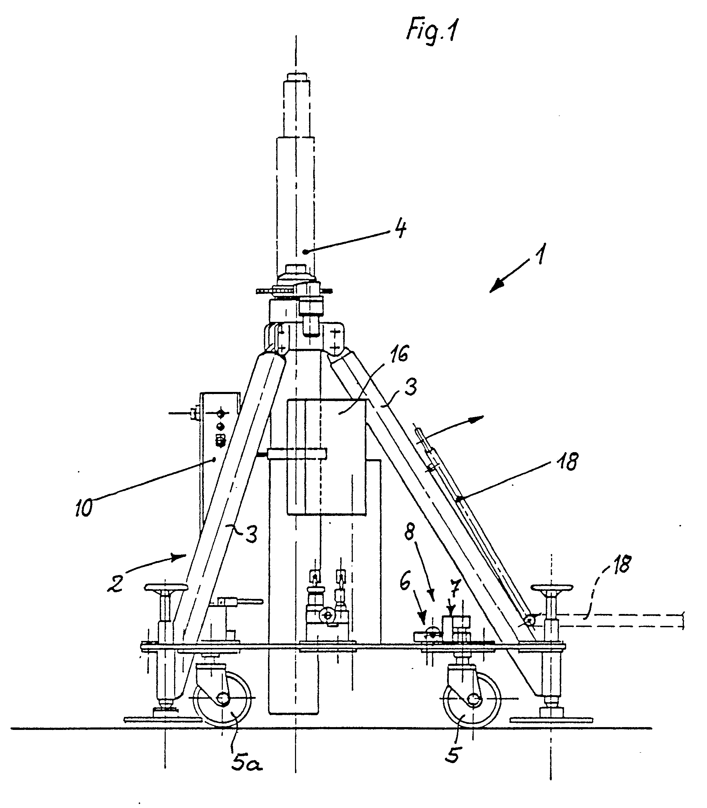

Wie in Fig. 1 erkennbar, ist die Antriebs- und Lenkeinheit 8 oberhalb des damit verbundenen Rades 5 angeordnet. Die Fahrantriebsverbindung zwischen dem Fahrantrieb 6 und dem Rad 5 erfolgt über ein Kettengetriebe, welches sich innerhalb einer Abdeckung 9 befindet (Fig. 3). Im Übertragungsweg zwischen Fahrantrieb 6 und Rad 5 ist noch eine Sicherheitsrutschkupplung vorgesehen. Die Lenkbewegung des Rades 5 erfolgt vorzugsweise durch einen hydraulisch gesteuerten Schwenkmotor, der einen Lenkwinkel von 180° ermöglicht. Sowohl der Fahrantrieb 6 als auch der Lenkantrieb 7 sind mit einer in Fig. 3 strichliniert angedeuteten Steuereinrichtung 10 verbunden, die hydraulische Proportionalventile zur stufenlosen Steuerung hat. Zu der Steuereinrichtung 10 gehört noch eine Fernbedieneinrichtung 11 (Fig. 2), bei der sich ein durch einen Steuerknüppel 12 gebildetes Steuerelement zum Bedienen des Fahrantriebes 6 und des Lenkantriebes 7 befindet. Außerdem sind bei dieser Fernbedieneinrichtung 11 noch Betätigungselemente für den Hubzylinder 4 sowie ein "Not-Aus"-Schalter 14 vorgesehen. Die Fernbedieneinrichtung 11 ist über Kabel 15 an die Steuereinrichtung 10 angeschlossen.

Zum Betrieb des Hubzylinders 4 ist ein Hydraulikaggregat 16 vorgesehen. Bei Verwendung von Hydraulikmotoren für den Fahrantrieb 6 und den Lenkantrieb 7 können diese Motoren von dem Hydraulikaggregat 16 mitversorgt werden.

In Fig. 2 ist noch eine Kabeltrommel 17 erkennbar, auf die das Stromversorgungskabel aufgerollt ist. Dieser elektrische Netzanschluß ist zur Versorgung des zum Hydraulikaggregat 16 gehörenden Elektromotors erforderlich. Gegebenenfalls können der Fahrantrieb 6 und der Lenkantrieb 7 auch Elektromotoren aufweisen, die dann mit einer Steuerelektronik verbunden sind. Für den Fahr- und Lenkbetrieb kann bei Verwendung von Elektromotoren für die Lenkung und den Antrieb eine in den Dreibockheber 1 eingebaute Batterie vorgesehen sein, so daß der Heber dann auch gut von einem Abstellplatz zum Flugzeug ohne Verwendung eines Schleppgerätes fahren kann.

In der Seitenansicht des Dreibockhebers 1 gemäß Fig. 1 ist noch eine hochgeklappte Schlepp-Deichsel 18 erkennbar, die zum Ankoppeln an ein Schleppgerät in die strichliniert angedeutete Schleppstellung heruntergeklappt werden kann. Diese Schlepp-Deichsel 18 ist mit einer hier nicht erkennbaren Umschaltvorrichtung verbunden, mittels der die Antriebs- und Lenkeinheit 8 bei in Schleppstellung heruntergeklappter Deichsel 18 von dem zugehörigen Rad 5 getrennt wird. In dieser Stellung ist somit das Rad 5 an die Deichsel 18 angekuppelt, so daß wie bisher auch ein Schleppbetrieb möglich ist. Soll jedoch ein Verfahren des Dreibockhebers 1 oder ein Positionieren mit Hilfe der Antriebs- und Lenkeinheit 8 erfolgen, so wird die Deichsel 18 nach oben in Ruhestellung geklappt und durch die Umschaltvorrichtung automatisch die Antriebs- und Lenkeinheit 8 an das Rad 5 angekuppelt, während die Deichsel 18 abgekuppelt wird.

Insgesamt ist durch Einsatz des erfindungsgemäßen Antrieb-und Lenksystems ein Selbstfahrheber geschaffen, der mit Hilfe der vorgesehenen Steuervorrichtung insbesondere der Fernbedienungseinrichtung, von einer einzigen Arbeitsperson bedient werden kann. Dabei ist ein wesentlich vereinfachtes, gesteuertes Positionieren des Dreibockhebers in seine Arbeitsstellung unter dem jeweiligen Aufnahmepunkt am Luftfahrzeug möglich.

Darüber hinaus ist bedarfsweise auch ein Selbst-Verfahren des Hebers von einem Abstellplatz zum Flugzeug und zurück möglich.

Zum Verfahren über "größere" Strecken ist eine Fahrgeschwindigkeit von z. B. 1,5 m/s vorgesehen, während zum Positionieren auf eine Fahrgeschwindigkeit von etwa 0,02 m/s umgeschaltet werden kann. Vorzugsweise ist dabei die Fahrgeschwindigkeit in vorgegebenen Bereichen stufenlos einstellbar.

Alle in der Beschreibung, den Ansprüchen und der Zeichnung dargestellten Merkmale können sowohl einzeln als auch in beliebiger Kombination miteinander erfindungswesentlich sein.

## Ansprüche

1. Heber, insbesondere Dreibockheber für Flugzeuge mit einem in einem Gestell angeordneten Hubzylinder sowie mit Rädern zum Verfahren des Dreibockhebers, **dadurch gekennzeichnet,** daß der Heber als Selbstfahrheber mit einem Fahrantrieb (6) und wenigstens einem lenkbaren Rad (5) ausgebildet ist.

2. Heber nach Anspruch 1, dadurch gekennzeichnet, daß er zwei parallel angeordnete Räder (5a) sowie ein mit einem Lenkantrieb (7) verbundenes drittes Rad (5) aufweist.

3. Heber nach Anspruch 1 oder 2, dadurch gekennzeichnet, daß der Fahrantrieb (6) und der Lenkantrieb (7) eine Antriebs- und Lenkeinheit bilden, die insbesondere oberhalb des Lenk- und Antriebs-Rades (5) angeordnet ist.

4. Heber nach einem oder mehreren der Ansprüche 1 bis 3, dadurch gekennzeichnet, daß eine hydraulische, insbesondere hydrostatische Antriebs- und Lenkeinheit mit einem Hydraulikantriebsmotor und einem Hydrauliksteuermotor vorgesehen ist, die mit einem Hydraulikaggregat (16) verbunden sind.

5. Heber nach einem oder mehreren der Ansprüche 1 bis 4, dadurch gekennzeichnet, daß die nicht angetriebenen und nicht lenkbaren Räder (5a) als Nachlaufräder ausgebildet und in einer Parallellage festlegbar sind.

6. Heber nach einem oder mehreren der Ansprüche 1 bis 5, dadurch gekennzeichnet, daß er eine in Schleppstellung und Ruhestellung umklappbare und in Schleppstellung mit dem Lenk-Rad (5) verbundene Schlepp-Deichsel (18) hat, die mit einer Umschaltvorrichtung zum Trennen der Antriebs- und Lenkeinheit (8) von dem zugehörigen Rad (5) in Schleppstellung der Deichsel (18) verbunden ist.

7. Heber nach einem oder mehreren der Ansprüche 1 bis 6, dadurch gekennzeichnet, daß er eine mit den Arbeits- und Steueraggregaten vorzugsweise über Kabel (15) verbundene Fernbedieneinrichtung (11) zumindest zur Betätigung der Lenkung und des Fahrantriebes aufweist.

8. Heber nach einem oder mehreren der vorstehenden Ansprüche, dadurch gekennzeichnet, daß für die Lenkung und oder den Fahrantrieb Elektromotoren vorgesehen sind.

9. Heber nach einem oder mehreren der Ansprüche 1 bis 8, dadurch gekennzeichnet, daß zur Stromversorgung der zum Heber gehörenden Aggregate eine Netz-Kabelverbindung vorgesehen ist.

10. Heber nach einem oder mehreren der Ansprüche 1 bis 8, dadurch gekennzeichnet, daß zur Stromversorgung zumindest des Fahrantriebes (6) und gegebenenfalls des Lenkantriebes (7) eine eingebaute Batterie vorgesehen ist.

*Fig.1*

Fig.2

EP 0 341 579 A2

Fig. 3